## Europäisches Patentamt
## European Patent Office
## Office européen des brevets

(19)

(11) Veröffentlichungsnummer: **0 142 042**
A1

(12)

# EUROPÄISCHE PATENTANMELDUNG

(21) Anmeldenummer: **84112302.9**

(22) Anmeldetag: **12.10.84**

(51) Int. Cl.⁴: **B 32 B 15/01**
**F 41 H 5/04, C 21 D 9/42**

---

(30) Priorität: **05.11.83 DE 3340031**

(43) Veröffentlichungstag der Anmeldung:
**22.05.85 Patentblatt 85/21**

(84) Benannte Vertragsstaaten:
**AT BE CH DE FR GB IT LI LU NL SE**

(71) Anmelder: **Thyssen Stahl Aktiengesellschaft**
**Kaiser-Wilhelm-Strasse 100**
**D-4100 Duisburg 11(DE)**

(72) Erfinder: **Pircher, Hans, Dr.**
**Eisenbornerweg 39**
**D-4330 Mülheim a.d. Ruhr(DE)**

(72) Erfinder: **Bentz, Werner**
**Nordstrasse 76**
**D-4320 Hattingen(DE)**

(72) Erfinder: **Tegethoff, Alfred**
**Max-Planck-Strasse 24**
**D-4030 Ratingen(DE)**

(74) Vertreter: **Patentanwaltsbüro Cohausz & Florack**
**Postfach 14 01 47**
**D-4000 Düsseldorf 1(DE)**

---

(54) **Panzerblech und Verfahren zu seiner Herstellung.**

(57) Die Erfindung betrifft ein Panzerblech aus einem durch Plattieren miteinander verbundenen und anschließend einer Wärmebehandlung unterworfenen Zweilagenstahl. Seine dem Beschuß zugewandte Seite besteht aus einer harten Auflage und die dem Beschuß abgewandte Seite aus einem weniger harten Grundwerkstoff. Kennzeichen der Erfindung ist die Zusammensetzung (in Massen-%):

a) der Auflage:

| | |
|---|---|
| 0,30 bis 0,80 | % Kohlenstoff |
| 0,10 bis 0,80 | % Silicium |
| 0,40 bis 1,20 | % Mangan |
| max. 0,015 | % Phosphor |
| max. 0,015 | % Schwefel |
| 0,20 bis 2,80 | % Chrom |
| 0,05 bis 1,00 | % Molybdän |
| 0,01 bis 0,05 | % Aluminium |
| max. 0,40 | % Nickel |

Rest Eisen einschließlich unvermeidbare Verunreinigungen

b) des Grundwerkstoffs:

| | |
|---|---|
| 0,17 bis 0,40 | % Kohlenstoff |
| 0,10 bis 0,80 | % Silicium |
| 0,40 bis 2,00 | % Mangan |
| max. 0,025 | % Phosphor |
| max. 0,025 | % Schwefel |
| 0,10 bis 1,50 | % Chrom |
| 0,05 bis 1,50 | % Molybdän |
| 0,01 bis 0,05 | % Aluminium |

Rest Eisen einschließlich unvermeidbare Verunreinigungen,

wobei der Kohlenstoffgehalt der Auflage deutlich über dem des Grundwerkstoffs angesetzt wird.

EP 0 142 042 A1

Panzerblech und Verfahren zu seiner Herstellung

Die Erfindung bezieht sich auf ein Panzerblech nach dem Oberbegriff des Anspruchs 1 sowie auf ein Verfahren zu seiner Herstellung.

Ein derartiges Verfahren zur Herstellung eines Panzerblechs, bei dem zwei Stahlbleche durch Plattieren miteinander verbunden und anschließend wärmebehandelt werden, ist aus der DE-PS 21 42 360 bekannt. Bei diesem Verfahren werden die beiden Stahlbleche nach dem Plattieren auf eine Temperatur zwischen 900 und 1050°C erwärmt, abgeschreckt oder an Luft abgekühlt und anschließend einer Anlaßbehandlung bei einer Temperatur zwischen 200 und 650°C unterworfen. Das erste Stahlblech, das heißt die Geschoßauftrefffläche bzw. Auflage des nach diesem Verfahren hergestellten Panzerblechs besteht dabei aus 0,3 – 1,0% C, 0,5 – 1,0% Si, 0,1 – 1,0% Mn, 3 – 10% Cr, 0,5 – 3,0% Mo, 0,2 – 1,0% V, Rest Fe und

83/313 EP
W/Ka

das zweite Stahlblech, das heißt das Trägerblech bzw. der Grundwerkstoff des Panzerblechs aus 0,1 - 0,3% C, 0,1 - 1,0% Si, 0,1 - 2,0% Mn, 2 - 10% Ni, 0,2 - 2,0% Cr, 0,2 - 2,0% Mo, Spuren V sowie Rest Fe.

Panzerbleche müssen bezüglich eines wirksamen Schutzes gegen auftreffende Geschosse, Granaten oder dergleichen einerseits eine hohe Festigkeit aufgrund ihrer Härte und andererseits aufgrund einer genügend großen Zähigkeit gute Deformationseigenschaften aufweisen, die es ermöglichen, die Stoßenergie zu absorbieren. Aus diesem Grund darf bei homogenen Panzerblechen einer einheitlichen Werkstoffzusammensetzung (Monobleche), wie beispielsweise bei den herkömmlichen hochkohlenstoffhaltigen Vergütungssonderstählen, die Härte des Panzerblechs nicht zu hoch eingestellt werden. Aus diesem Grund beträgt bei den bekannten und in der Praxis eingesetzten Mono-Panzerblechen die Brinell-Härte max. ca. 530 HB 5/750 (im folgenden HB). Wird eine noch größere Härte eingestellt, so ist ein aus diesem Werkstoff sehr hoher Härte hergestelltes Blech aufgrund seiner Sprödigkeit für die Verwendung als Panzerblech nicht mehr geeignet.

Das nach dem aus der DE-PS 21 42 360 vorbekannten Verfahren hergestellte Panzerblech aus einem Zweilagenstahl besitzt im Vergleich zu diesen Monoblechen den Vorteil, daß die Geschoßauftrefffläche (Auflage) eine größere Härte und die gegenüberliegende Seite (Grundwerkstoff), das heißt das Trägerblech des Zweilagenstahls, günstigere Duktilitäts- bzw. Zähigkeitseigenschaften aufweist. Wird als Maßstab für die Güte bzw. Qualität einer Panzerung die Sicherheit gegen senkrechten Beschuß zugrunde gelegt, so ergibt sich für das nach dem aus dieser Patentschrift vorbekannten Verfahren hergestellte Panzerblech eine etwas geringere Mindestdicke im
Vergleich zu derjenigen, die bei Mono-Panzerblechen erreichbar ist. Sofern daher infolge eines konstruktiv vorgegebenen Höchstgewichts des aus einem Panzerblech hergestellten Gegenstands wesentlich geringere Blechdicken
vorgesehen werden müssen, ist die Sicherheit gegen senkrechten Beschuß mit einem Panzerblech gemäß der DE-PS
21 42 360 nicht mehr gewährleistet. Eine Beschußsicherheit bei sonst gleichen Bedingungen ist dann ggf. nur
noch unter einem Beschußwinkel $< 90°$ gegeben. Dies versucht man konstruktiv dadurch zu erreichen, daß die aus
dem Panzerblech bestehenden Bauteile in der Konstruktion
geneigt angeordnet werden.

Insgesamt hat sich gezeigt, daß auch das nach dem aus der
DE-PS 21 42 360 vorbekannten Verfahren hergestellte Panzerblech aus einem Zweilagenstahl noch nicht die gewünschte
Sicherheit gegen senkrechten Beschuß bzw. gegen einen Beschuß unter einem Winkel $< 90°$ gewährleistet. Dies ist
insbesondere dann der Fall, wenn aufgrund der konstruktionsbedingten Vorgaben nur Panzerbleche einer geringen
Dicke, beispielsweise von 8 mm und weniger, eingesetzt
werden können und die erforderliche Beschußsicherheit
auch nicht mehr durch eine geneigte Anordnung der entsprechenden Bauteile zu erzielen ist. Ein weiterer Nachteil, der nach diesem vorbekannten Verfahren hergestellten Panzerbleche sind die beträchtlichen Anteile
von Legierungselementen, wie z.B. Chrom (bis max. 10%)
und Vanadium (bis max. 1,0%) im Auflagewerkstoff und
Nickel (bis max. 10%) im Grundwerkstoff. Aufgrund der
bei diesem Verfahren nach dem Plattieren gewählten Wärmebehandlung, die aus einem Härten und Anlassen des Zwei-

- 4 -

lagenstahls besteht, ist ein Zulegieren von Vanadium zu dem Auflagewerkstoff erforderlich, um zu vermeiden, daß sich die nach dem Härten des Zweilagenstahls eingestellte Härte der Auflage durch die sich anschließende Anlaßbehandlung wieder abnimmt. Wie das bevorzugt beanspruchte und geschützte Verfahren (s. Anspruch 2 und 3) und insbesondere die Ausführungsbeispiele zeigen, kommt es bei diesem vorbekannten Verfahren primär auf einen niedrigen Kohlenstoffgehalt (C = 0,15%) für den Grundwerkstoff und auf eine abschließende Anlaßbehandlung bei hohen Temperaturen (520 bzw. 525° C) an. Beide Maßnahmen bewirken aber gute Duktilitäts- bzw. Zähigkeitseigenschaften und geringe Härte (ca. 300 HB) des Grundwerkstoffs. Im Vergleich zu den Mono-Panzerblechen sind demnach bei diesem vorbekannten Verfahren primär eine etwas höhere Härte für die Geschoßauftrefffläche und gute Duktilitäts- bzw. Zähigkeitseigenschaften bei wesentlich geringerer Härte für das Trägerblech entscheidend.

Hiervon ausgehend liegt der Erfindung die Aufgabe zugrunde, ein Panzerblech der eingangs genannten Art mit besseren Werkstoffeigenschaften für die Auflage und für den Grundwerkstoff zu entwickeln, so daß sich eine im Vergleich zum vorgenannten Stand der Technik geringere Mindestdicke des Panzerblechs ergibt. Dabei soll das Trägerblech bzw. der Grundwerkstoff mit ferritischen Elektroden ebenfalls schweißbar sein.

Erfindungsgemäß wird diese Aufgabe durch ein Panzerblech der eingangs genannten Art mit den im kennzeichnenden Teil der Ansprüche 1 bis 6 für die Auflage und für den Grundwerkstoff angegebenen Werkstoffzusammensetzung sowie Merkmalen gelöst. Die Stähle des Zweilagenstahls unterscheiden sich um mindestens etwa 0,10% C. Erfindungswesentlich ist, daß nicht nur den Härteeigenschaften der Auflage, sondern insbesondere der Härte des Grundwerkstoffs besondere Bedeutung beigemessen wird. Die Härte des Grundwerkstoffs des erfindungsgemäßen Zweilagenstahls entspricht dabei der Härte der bekannten und in der Praxis eingesetzten Mono-Panzerbleche. Erfindungsgemäß wird dieser als Trägerblech dienende harte Grundwerkstoff auf einer Seite durch ein Plattieren mit einer Auflage möglichst großer Härte versehen. Im Unterschied zu dem aus der DE-PS 21 42 360 bekannten Stand der Technik ist die Rolle des Grundwerkstoffs nun nicht mehr darauf beschränkt, im Hinblick auf seine Zähigkeitseigenschaften die Geschoß- bzw. Stoßenergie durch plastische Verformung zu vernichten. Die Härte des Grundwerkstoffs wird vielmehr entscheidend erhöht und derart optimiert, daß sie einerseits einen möglichst großen Beitrag zum Widerstand gegen das Durchdringen des Geschosses leistet, andererseits eine ausreichende Zähigkeit verbleibt, um auch aufgrund der durch das Plattieren erzeugten innigen Verbindung Auflage/Grundwerkstoff insgesamt ein sprödes Zerspringen bzw. Reißen des Materials des Zweilagenstahls zu verhindern. Die Stoß- bzw. Geschoßenergie wird nunmehr im wesentlichen durch die Eigendeformation des Geschosses und praktisch nicht mehr durch die plastische Verformung des Grundwerkstoffs verzehrt.

Demgemäß ist das erfindungsgemäße Panzerblech dadurch gekennzeichnet, daß bei ihm in jedem Fall eine Härte $> 600$ HB, vorzugsweise 650 bis 700 HB, für die äußere hochharte Auflage und eine Härte von mindestens 380 HB, vorzugsweise 450 bis 520 HB, für den Grundwerkstoff erreicht werden. Auflage und Grundwerkstoff unterscheiden sich bezüglich ihrer Härte um mindestens 130 HB, jedoch nur um maximal 300 HB, vorzugsweise um maximal 150 bis 250 HB. Insgesamt ergibt sich damit eine günstigere Beschußsicherheit im Vergleich zu der aus der DE-PS 21 42 360 bekannten Panzerung, bei der die Härte der äußeren Geschoßauftrefffläche ca. 600 HB beträgt und die Härte des Grundwerkstoffs lediglich in der Größenordnung von 300 HB liegt.

Die Härtewerte sowohl des Grundwerkstoffs als auch der Auflage des erfindungsgemäßen Panzerblechs können optimal eingestellt und dadurch bedingt die kleinstmögliche Mindestdicke des Panzerblechs bezüglich der Sicherheit gegen senkrechten Beschuß erreicht werden, sofern der Grundwerkstoff und die Auflage mit den jeweiligen erfindungsgemäßen Werkstoffzusammensetzungen in besonderer Weise plattiert und anschließend wärmebehandelt werden. Die erfindungsgemäßen Maßnahmen zur Herstellung des erfindungsgemäßen Panzerblechs gemäß einem der Ansprüche 1 bis 6 sind in den Ansprüchen 7 bis 12 angegeben.

Der aus Auflage und Grundwerkstoff bestehende erfindungsgemäße Zweilagenstahl kann vor der Wärmebehandlung durch ein Walzplattieren bis auf Enddicke hergestellt werden. Vorzuziehen ist jedoch ein Sprengplattieren mit nachfolgendem Warmwalzen bis auf Enddicke. Besondere Bedeutung kommt dabei für die erfindungsgemäßen Zweilagenstähle mit einer Enddicke < 20 mm, vorzugsweise < 15 mm, dem Plattieren und der anschließenden Wärmebehandlung von Grundwerkstoff und Auflage im Doppelkasten zu, bei dem die Auflage innen und der Grundwerkstoff außen angeordnet sind. Die Herstellung des Doppelkastens erfolgt dabei vor dem Walzplattieren oder nach dem Sprengplattieren vor dem sich daran anschließenden Warmwalzen. Diese Anordnung der hochharten Auflage im Inneren des Pakets verhindert eine die Beschußsicherheit beeinträchtigende Abkohlung beim Walzen und bei der Wärmebehandlung, während der außen liegende Grundwerkstoff bei der Wärmebehandlung auf die notwendige hohe Härte gebracht wird.

Für die erfindungsgemäßen Zweilagenstähle wird vorzugsweise das folgende Dickenverhältnis zwischen Auflage und Grundwerkstoff gewählt. Bei den Zweilagenstählen mit einer Enddicke $<$ 20 mm, vorzugsweise $<$ 15 mm, liegt das Dickenverhältnis Auflage : Grundwerkstoff vorzugsweise im Bereich von 50 : 50 bis 60 : 40. Bei den dickeren Zweilagenstählen mit einer Enddicke $>$ 15 mm, vorzugsweise $>$ 20 mm, die nicht im Doppelkasten hergestellt werden, liegt das Dickenverhältnis dagegen vorzugsweise im Bereich von 30 : 70 bis 40 : 60.

Ein weiterer wesentlicher wirtschaftlicher Vorteil des erfindungsgemäßen Panzerblechs besteht darin, daß die Wärmebehandlung auf ein Härten beschränkt werden kann. Sofern jedoch ein zusätzliches Anlassen im Temperaturbereich von 170 bis 230° C erfolgt, wird der Eigenspannungszustand des Härtungsgefüges vermindert, ohne daß die für die Beschußsicherheit wesentliche Härte des erfindungsgemäßen Panzerblechs entscheidend vermindert wird. Sofern erforderlich kann durch diese zusätzliche Maßnahme die Verarbeitbarkeit des Panzerblechs verbessert werden.

Wird die Wärmebehandlung auf ein Härten beschränkt, so werden Grundwerkstoff und Auflage nach dem Walzplattieren bzw. nach dem Sprengplattieren und Warmwalzen erfindungsgemäß auf eine Temperatur im Bereich von 880 bis 980° C erwärmt, bei dieser Temperatur gehalten und anschließend von dieser Temperatur bis auf Raumtemperatur abgeschreckt. Dabei wird der Werkstoffverbund bzw. der Zweilagenstahl ggf. im Doppelkasten solange auf Härtetemperatur gehalten, bis die mit der Umwandlung des Gefüges in Austenit verbundene Homogenisierung, d.h. insbesondere die Auflösung der Carbide und die gleichmäßige Konzentrationsverteilung gelöster Elemente, abgeschlossen ist. Diese Zeit des Haltens beträgt ca. 20 bis 40 Minuten, insbesondere etwa 30 Minuten.

Das sich daran anschließende Abschrecken von der Härtetemperatur erfolgt vorzugsweise in Öl, weil dadurch ein Verzug des ausgewalzten Zweilagenstahls bzw. des im Doppelkasten ausgewalzten Grundwerkstoffs und der Auflage in vorteilhafter Weise vermieden wird. Das Abschrecken kann erfindungsgemäß jedoch auch in oder mit Wasser, mittels beschleunigt aufgebrachter Wasserstrahlen oder mit einem Wasser-Gas-Gemisch erfolgen. In diesem Fall geschieht das Abschrecken des erfindungsgemäßen Zweilagenstahls im Doppelkasten und ist auf Zweilagenstähle mit einer Enddicke < 20 mm, vorzugsweise < 15 mm, beschränkt.

Wird das erfindungsgemäße Panzerblech, d.h. der aus Grundwerkstoff und Auflage bestehende Zweilagenstahl im Anschluß an das Härten noch zusätzlich angelassen, um vorrangig Eigenspannungen im Härtungsgefüge abzubauen, so wird der erfindungsgemäße Zweilagenstahl bzw. der Doppelkasten aus dem Zweilagenstahl erfindungsgemäß auf die Anlaßtemperatur im Bereich von 170 bis 230° C erwärmt und vorzugsweise mindestens 40 Minuten lang gehalten, bis die entsprechenden Diffusionsvorgänge abgeschlossen sind. Anschließend wird der Zweilagenstahl bzw. der Doppelkasten vorzugsweise an ruhender Luft bis auf Raumtemperatur abgekühlt und schließlich im Falle des Doppelkastens aufgetrennt.

- 9 -

Die drei folgenden Beispiele bezüglich Werkstoffzusammensetzung der Auflage und des Grundwerkstoffs, bezüglich des Walzplattierens und der sich daran anschließenden Wärme- bzw. Vergütungsbehandlung dienen der Erläuterung der Erfindung.

**Beispiel 1**

a) Auflage (dem Beschuß zugewandte Seite des Zweilagenstahls)

0,53% C, 0,36% Si, 0,79% Mn, 0,010% P, 0,006% S, 2,50% Cr, 0,83% Mo, 0,020% Al, 0,25% Ni, Rest Fe.

b) Grundwerkstoff (vom Beschuß abgewandte Seite des Zweilagenstahls)

0,32% C, 0,30% Si, 0,55% Mn, 0,012% P, 0,003% S, 1,40% Cr, 0,28% Mo, 0,0020% B, 0,025% Al, 0,10% Ti, Rest Fe.

Das Zweilagen-Panzerstahlblech wird hergestellt, indem die beiden Werkstoffpartner durch Sprengplattieren zum Halbzeug verbunden werden. Das Dickenverhältnis von Auflage zu Grundwerkstoff wird mit 50 : 50 eingestellt. Das vorgesprengte Halbzeug wird zu einem mit einer Trennschicht, beispielsweise aus Chromoxid, versehenen Doppelkasten so zusammengebaut, daß der Auflagewerkstoff innen, der Grundwerkstoff aber außen liegt. Der Doppelkasten wird im Walzwerk ausgewalzt und anschließend als geschlossenes Paket gehärtet. Dabei wird das Paket nach einer Erhitzung auf 920° C und einer Haltezeit von 30 Minuten in Öl abgeschreckt.

Das gehärtete Paket wird anschließend aufgetrennt. Die beiden derart erzeugten Zweilagenbleche mit einer Nenndicke zwischen 7,5 und 8,0 mm weisen Härten von etwa 720 HB für die Auflage sowie ca. 520 HB für den Grundwerkstoff auf.

## Beispiel 2

a) Auflage (dem Beschuß zugewandte Seite des Zweilagenstahls)

    0,53% C,  0,36% Si,  0,79% Mn,  0,010% P,  0,006% S, 2,50% Cr,  0,83% Mo,  0,020% Al,  0,25% Ni,  Rest Fe.

b) Grundwerkstoff (vom Beschuß abgewandte Seite des Zweilagenstahls)

    0,17% C,  0,57% Si,  0,85% Mn,  0,012% P,  0,007% S, 0,71% Cr,  0,25% Mo,  0,0020% B,  0,036% Al,  0,08% Zr, 0,12% Ti,  Rest Fe.

Das Zweilagen-Panzerstahlblech wird hergestellt, indem die beiden Werkstoffpartner durch Sprengplattieren zum Halbzeug verbunden werden. Das Dickenverhältnis von Auflage zu Grundwerkstoff wird mit 60 : 40 eingestellt. Das sprengplattierte Halbzeug wird zu einem mit einer Trennschicht versehenen Doppelkasten so zusammengebaut, daß der Auflagewerkstoff innen, der Grundwerkstoff aber außen liegt. Der Doppelkasten wird im Walzwerk ausgewalzt und anschließend als geschlossenes Paket vergütet. Dabei wird das Paket nach einer Erhitzung auf 920° C und einer Haltezeit von 30 Minuten in Öl abgeschreckt und anschließend bei 180° C 1 Stunde angelassen mit einer abschließenden Abkühlung an Luft. Das fertig vergütete Paket wird aufgetrennt. Die beiden derart erzeugten Zweilagenbleche mit einer Nenndicke von 7,5 mm weisen Härten von etwa 700 HB für die Auflage sowie rund 400 HB für den Grundwerkstoff auf.

- 11 -

Beispiel 3

a) Auflage (dem Beschuß zugewandte Seite des Zweilagenstahls)

0,53% C,  0,36% Si,  0,79% Mn,  0,010% P,  0,006% S,
2,50% Cr,  0,83% Mo,  0,020% Al, Rest Fe.

b) Grundwerkstoff (vom Beschuß abgewandte Seite des Zweilagenstahls)

0,32% C,  0,30% Si,  0,55% Mn,  0,012% P,  0,003% S,
1,40% Cr,  0,28% Mo,  0,0020% B,  0,025% Al,
0,10% Ti,  Rest Fe.

Das Zweilagen-Panzerblech wird hergestellt, indem die beiden Werkstoffpartner durch Sprengplattieren zum Halbzeug
verbunden werden. Das Dickenverhältnis Auflage : Grundwerkstoff wird mit 35 : 65 eingestellt. Das vorgesprengte
Halbzeug wird im Walzwerk auf eine Enddicke von 25 mm ausgewalzt und anschließend gehärtet. Dabei wird das Zweilagenblech nach einer Erhitzung auf 920° C und einer Haltezeit von 30 Minuten in Öl abgeschreckt. Das derart erzeugte Zweilagenblech weist eine Härte von ca. 670 HB für
die Auflage sowie ca. 500 HB für den Grundwerkstoff auf.

Patentansprüche

1. Panzerblech aus einem durch Plattieren miteinander verbundenen und anschließend einer Wärmebehandlung unterworfenen Zweilagenstahl, dessen dem Beschuß zugewandte Seite aus einer harten Auflage und dessen dem Beschuß abgewandte Seite aus einem weniger harten Grundwerkstoff besteht,

g e k e n n z e i c h n e t   d u r c h

folgende Zusammensetzung (in Massen-%):

a) für die Auflage

| 0,30 bis 0,80 | % Kohlenstoff |
| 0,10 bis 0,80 | % Silicium |
| 0,40 bis 1,20 | % Mangan |
| max. 0,015 | % Phosphor |
| max. 0,015 | % Schwefel |
| 0,20 bis 2,80 | % Chrom |
| 0,05 bis 1,00 | % Molybdän |
| 0,01 bis 0,05 | % Aluminium |
| max. 0,40 | % Nickel |

Rest Eisen einschließlich unvermeidbare Verunreinigungen

b) für den Grundwerkstoff

| 0,17 bis 0,40 | % Kohlenstoff |
| 0,10 bis 0,80 | % Silicium |
| 0,40 bis 2,00 | % Mangan |
| max. 0,025 | % Phosphor |
| max. 0,025 | % Schwefel |
| 0,10 bis 1,50 | % Chrom |
| 0,05 bis 1,50 | % Molybdän |
| 0,01 bis 0,05 | % Aluminium |

Rest Eisen einschließlich unvermeidbare Verunreinigungen,

wobei der Kohlenstoffgehalt der Auflage deutlich über dem des Grundwerkstoffs angesetzt wird.

2. Panzerblech nach Anspruch 1,

   g e k e n n z e i c h n e t    d u r c h

   folgende Zusammensetzung für den Grundwerkstoff:

   0,17 bis  0,25   % Kohlenstoff

   0,40 bis  0,80   % Silicium

   0,70 bis  1,20   % Mangan

        max. 0,025  % Phosphor

        max. 0,025  % Schwefel

   0,50 bis  1,00   % Chrom

   0,20 bis  0,60   % Molybdän

   0,01 bis  0,05   % Aluminium

   Rest Eisen einschließlich unvermeidbare Verunreinigungen.

3. Panzerblech nach Anspruch 1,

   g e k e n n z e i c h n e t    d u r c h

   folgende Zusammensetzung für den Grundwerkstoff:

   0,27 bis  0,32   % Kohlenstoff

   0,10 bis  0,40   % Silicium

   0,50 bis  0,80   % Mangan

        max. 0,010  % Phosphor

        max. 0,010  % Schwefel

   1,00 bis  1,50   % Chrom

   0,10 bis  0,30   % Molybdän

   0,01 bis  0,05   % Aluminium

   Rest Eisen einschließlich unvermeidbare Verunreinigungen.

4. Panzerblech nach einem der Ansprüche 1 bis 3,

   d a d u r c h   g e k e n n z e i c h n e t ,

   daß der Grundwerkstoff und/oder die Auflage zusätzlich bis 0,008% Bor und 0,03 bis 0,20% Titan enthält.

5. Panzerblech nach einem der Ansprüche 1 bis 4,
d a d u r c h   g e k e n n z e i c h n e t ,
daß der Grundwerkstoff zusätzlich 0,01 bis 0,12%
Zirconium enthält.

6. Panzerblech nach einem der Ansprüche 1 bis 5,
d a d u r c h   g e k e n n z e i c h n e t ,
daß der Grundwerkstoff eine Härte von mindestens
380 HB besitzt und sich Auflage und Grundwerkstoff
bezüglich ihrer Härte um mindestens 130 HB, jedoch
nur um max. 300 HB, vorzugsweise um max. 150 bis
250 HB, unterscheiden.

7. Verfahren zur Herstellung eines Panzerblechs nach
einem der Ansprüche 1 bis 6,
d a d u r c h   g e k e n n z e i c h n e t ,
daß zunächst der aus Auflage und Grundwerkstoff bestehende Zweilagenstahl durch ein Walzplattieren bis
auf Enddicke, vorzugsweise durch ein Sprengplattieren
mit nachfolgendem Warmwalzen bis auf Enddicke, hergestellt und der Zweilagenstahl anschließend wärmebehandelt wird

durch ein Erwärmen auf eine Temperatur im Bereich von
880 bis 980° C,

durch ein Halten bei dieser Temperatur und

durch ein Abkühlen derart, daß die Auflage vollständig
und der Grundwerkstoff weitgehend ( > 75%) in Martensit
umgewandelt werden.

8. Verfahren·nach Anspruch 7,
d a d u r c h   g e k e n n z e i c h n e t ,
daß vor dem Plattieren das Dickenverhältnis Auflage :
Grundwerkstoff im Bereich von 30 : 70 bis 70 : 30 gewählt wird.

9. Verfahren nach Anspruch 7 oder 8,
d a d u r c h   g e k e n n z e i c h n e t ,
daß vor dem Walzplattieren oder nach dem Sprengplattieren vor dem anschließenden Warmwalzen ein aus dem
Zweilagenstahl aufgebauter Doppelkasten hergestellt
wird, bei dem die Auflage innen und der Grundwerkstoff außen angeordnet sind und daß anschließend der
Zweilagenstahl als Doppelkasten in geschlossener
Form wärmebehandelt wird.

10. Verfahren nach einem der Ansprüche 7 bis 9 zur Herstellung des Panzerblechs nach einem der Ansprüche 1
bis 6,
d a d u r c h   g e k e n n z e i c h n e t ,
daß die Abkühlung beschleunigt in Öl erfolgt.

11. Verfahren nach Anspruch 9 zur Herstellung des Panzerblechs nach einem der Ansprüche 1 bis 6,
d a d u r c h   g e k e n n z e i c h n e t ,
daß die Abkühlung beschleunigt mittels Wasser erfolgt.

12. Verfahren nach Anspruch 10 oder 11,
g e k e n n z e i c h n e t   d u r c h
eine anschließende Anlaßbehandlung, bestehend aus

einem Erwärmen auf eine Anlaßtemperatur im Bereich von
170 bis 230° C, einem Halten bei dieser Temperatur und

einem sich daran anschließenden Abkühlen an ruhender oder bewegter Luft bis auf Raumtemperatur.

0142042

Europäisches
Patentamt

**EUROPÄISCHER RECHERCHENBERICHT**

Nummer der Anmeldung

EP 84 11 2302

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 249 629 (R.K. HOPKINS)<br><br>* Seite 1, linke Spalte, Zeile 28 - rechte Spalte, Zeile 20, insbesondere das erste Beispiel: 0,25%C, 1,25%Cr, 0,5% Mo *<br><br>--- | 1,3 | B 32 B 15/01<br>F 41 H 5/04<br>C 21 D 9/42 |
| A | US-A-2 474 682 (B. LIEBOWITZ)<br><br>* Anspruch; Seite 1, linke Spalte, Zeilen 39-54 *<br><br>--- | 1,7 | |
| A | US-A-2 438 759 (B. LIEBOWITZ)<br><br>* Patentansprüche 1,8,9 *<br><br>--- | 1,7 | |
| A | BE-A- 428 707 (VAN ROLLEGHEM)<br><br>* Patentansprüche 1,4; Seite 3, Absatz 3, letzter Absatz; Seite 4, Absatz 6 *<br><br>--- | 1 | **RECHERCHIERTE SACHGEBIETE (Int. Cl.4)**<br><br>B 32 B 15/01<br>C 21 D 9/42<br>F 41 H 5/ |
| A | R.C. LAIBLE: "Ballistic materials and penetration mechanics", Band 5, 1980, Seiten 148-162. Elsevier scientific publishing company, Amsterdam, (NL). D.J. PAPETTI: "Steel Armor".<br><br>* Seite 151, Absatz 2 - Seite 152; Seite 154; Figur 9 *<br><br>--- -/- | 1,6 | |

Der vorliegende Recherchenbericht wurde für alle Patentansprüche erstellt.

| Recherchenort | Abschlußdatum der Recherche | Prüfer |
|---|---|---|
| DEN HAAG | 15-01-1985 | LIPPENS M.H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-C-2 142 360 (CREUSOT-LOIRE) <br><br> * Patentansprüche 1-4 * <br><br> ----- | 1 | |
| | | | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| DEN HAAG | 15-01-1985 | LIPPENS M.H. |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82